# EUROPEAN PATENT APPLICATION

(11) **EP 1 867 529 A1**
(43) Date of publication of application: **19.12.2007**
(21) Application number: 07109552.5
(22) Date of filing: 04.06.2007
(51) Int. Cl.: B60R 21/23

(54) **Side airbag, side airbag apparatus, and motor vehicle seat**

(30) Priority: 12.06.2006 JP 2006161745; 12.06.2006 JP 2006161746; 12.06.2006 JP 2006161747; 10.05.2007 JP 2007125458
(71) Applicant: TAKATA CORPORATION, Minato-ku, Tokyo 106-8510 (JP)
(72) Inventor: Nishimura, Tomotoshi c/o Takata Corporation, Tokyo 106-8510 (JP); Nakahara, Shingo c/o Takata Corporation, Tokyo 106-8510 (JP)
(74) Representative: Vossius & Partner

(57) **Abstract**

A side airbag, a side airbag apparatus, and a motor vehicle seat are provided which are capable of improving the deploying property. A side airbag 16 that is inflated and deployed in a space between a side wall portion of an automobile body and an occupant 12 seated on a seat 10 disposed inside the body. A bag outer edge portion 32 at a tip end side of an inflating direction is formed into a shape including a concave portion 34 at a position corresponding to an elbow portion 12a of the occupant 12 in an inflated and deployed condition so that an interference of the bag outer edge portion 32 with the elbow portion 12a of the occupant 12 is reduced when in inflation and deployment (Fig. 2).

## Description

The present invention relates to a side airbag, a side airbag apparatus, and a motor vehicle seat for restraining an occupant's body in occurrence of a side collision or the like occurred in a motor vehicle such as an automobile or the like.

A side airbag apparatus for restraining an occupant's body by inflating a side airbag toward a side portion of the occupant by means of an inflator, in occurrence of a side collision, a rollover of a vehicle body or the like of a motor vehicle such as an automobile is known. The side airbag apparatus is housed in, for example, a seat back portion of a seat. The side airbag is inflated and deployed into a space between the occupant and a side wall portion of the vehicle body from the seat back portion by means of the gas discharged from the inflator in occurrence of the side collision or the like (for example, refer to JP-A-2005-53465 (Patent Document 1)).

In the aforementioned hitherto known technology, a basic construction of a side airbag apparatus is disclosed in which a side airbag constructed as a bag-shaped body formed from a joined base cloth is housed in a seat back portion of a vehicle seat, and a pressurized fluid from an inflator is supplied into the airbag when in an emergency, and the airbag is deployed into a space between an occupant and a side wall portion of a vehicle body. In the side airbag apparatus having such a construction, a further improvement of a deploying capability is in demand.

An object of the present invention is to provide a side airbag, a side airbag apparatus, and a motor vehicle seat, capable of improving the deploying capability.

To achieve the above-described object, the first aspect of the invention is characterized in a side airbag that is inflated and deployed in a space between a side wall portion of a motor vehicle body and an occupant seated on a seat disposed inside the body, in which a bag outer edge portion at a tip end side of an inflating direction is formed into a shape reducing an interference of the bag outer edge portion with the elbow portion of the occupant, when in inflation and deployment.

In the first aspect of the present invention, the bag outer edge portion at the tip end side in the inflating direction of the side airbag is formed into a shape such that the interference of the bag outer edge portion with the elbow portion of the occupant, when in inflation and deployment is reduced. Thereby, when the side airbag is inflated and deployed in a space between the side wall portion of the vehicle body and the occupant seated on the seat disposed inside the body, the tip end side in the inflating direction of the airbag can suppressed to get caught by the elbow portion of the occupant. As a result, the deployment of the airbag is suppressed to be blocked, and a deploying property of the airbag can be improved.

Further, the first invention of the present invention is constructed for the bag outer edge portion to be formed into a shape such as, for example, a concave portion or the like, which reduces the interference with the elbow portion of the occupant. Thereby, as for a manufacturing process such as a stitching work or the like performed thereafter, the side airbag can be manufactured without increasing a particular process, by cutting out the base cloth constructing the airbag into a shape corresponding thereto. Accordingly, an extra stitching process is not required in comparison to a construction in which, for example, a concave portion or a non-inflating portion having a smaller thickness than other portion formed by stitching a periphery of the portion on an inner periphery side relative to the bag outer edge portion prevents the interference of the airbag with the elbow portion. This results in improvement of the productivity of the airbag.

The second aspect of the invention is characterized in that in the aforementioned first invention, a shape of the bag outer edge portion is formed to be the shape having a concave portion at a position corresponding to the elbow portion of the occupant in an inflated and deployed condition.

In the second aspect of the present invention, the concave portion is provided at a position in the bag outer edge portion at the tip end side in the inflating direction of the side airbag in the inflated and deployed condition, corresponding to the elbow portion of the occupant. Thereby, when the side airbag is inflated and deployed in a space between the side wall portion of the vehicle body and the occupant seated on the seat disposed inside the body, the tip end portion in the inflating direction of the airbag can be suppressed to get caught by the elbow portion of the occupant. As a result, the deployment of the airbag is suppressed to be blocked, and the deploying property can be improved.

The third aspect of the invention is characterized in that in the aforementioned second invention, the side airbag is housed in a condition such as that the base end side of the inflating direction is folded back into an accordion-like shape, and the tip end side of the inflating direction is folded back into a roll-shape.

The side airbag is housed in, for example, a seat back portion of the seat while being folded back, and is inflated and deployed in a space between the occupant and the side wall portion of the vehicle body from the seat back portion of the seat by means of gas blown out from an inflator in occurrence of a side collision of the motor vehicle, a rollover of the vehicle body, or the like.

In general, the airbag is housed in a predetermined position in a condition of being folded back into the accordion-like shape or the roll-shape. In general, there are tendencies that when an airbag is housed while being folded back into an accordion-like shape, a deploying speed is relatively fast, and when an airbag is housed while being folded back into a roll-shape, the airbag hardly receives an influence of the obstacle.

In the third aspect of the present invention, the side airbag is housed in the predetermined position in the condition of being folded back into the accordion-like shape at the base end side in the inflating direction thereof, and being folded back into the roll-shape at the tip end side in the inflating direction thereof. Thereby, the deploying speed of the airbag can be caused to be fast, because the same is folded back into the according-like shape at the base end side of the inflating direction where the possibility of being in contact with the obstacle such as the arm of the occupant or the like is low. Further, the influence of the obstacle can hardly be received, because the side airbag is folded back into the roll-shape at the tip end side of the inflating direction where there is a possibility that the obstacle such as the arm of the occupant or the like exists. As described above, according to the present invention, since both the improvement of the deploying speed and the suppression for the influence of the obstacle can be satisfied, the deploying property of the airbag can further be improved.

The fourth aspect of the invention is characterized in that in the aforementioned second or the third invention, an inside of the side airbag is partitioned into at least two chambers.

In the fourth aspect of the present invention, the side airbag can be constructed with, for example, two chambers of an upper chamber where a chest portion of the occupant is in contact therewith, and a lower chamber where a waist portion of the occupant is in contact therewith. Thereby, a body of the occupant can be restrained respectively in the chest portion and the waist portion in occurrence of the side collision of the motor vehicle, the rollover of the vehicle body, or the like, and this result in improvement of safety.

So as to achieve the above-described object, the fifth aspect of the invention is characterized in the side airbag apparatus including the side airbag according to any one of the aforementioned first to fourth invention, and an inflator for supplying a pressurized fluid for inflating and deploying the side airbag.

So as to achieve the above-described object, the sixth aspect of the invention is characterized in the motor vehicle seat including the side airbag according to any one of the aforementioned first to fourth invention, and an inflator for supplying a pressurized fluid for inflating and deploying the side airbag.

According to the present invention, a deploying property of a side airbag can be improved.

Hereinbelow, an embodiment of the present invention will be explained with reference to the drawings.
Fig. 1 is a schematic side view illustrating an automobile seat provided with an embodiment of a side airbag apparatus according to the present invention;
Fig. 2 is a side view illustrating an entire structure in a condition where an embodiment of the side airbag according to the present invention is inflated and deployed, and a partially enlarged view in the vicinity of a chamber connecting portion;
Fig. 3 is a perspective view illustrating an entire structure of a sleeve provided in an inflator;
Fig. 4 is a perspective view illustrating an entire structure of a heat cloth;
Fig. 5 is a view explaining the way how to fold back the side airbag when the same is housed in a casing; and
Fig. 6 is a cross-sectional view illustrating the casing showing a condition where the folded-back side airbag is housed in the casing.

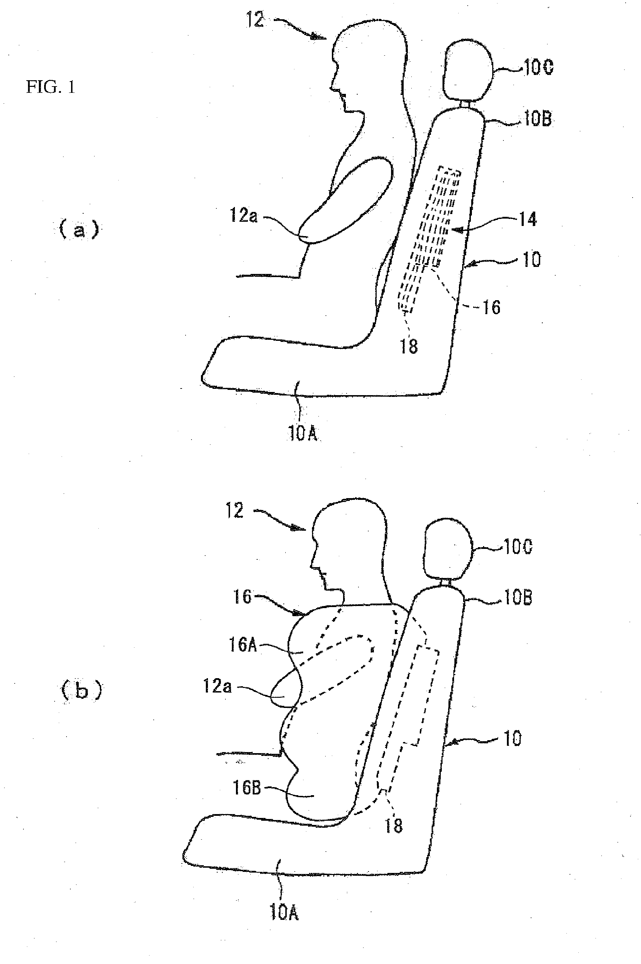

Fig. 1 is a schematic side view illustrating an automobile seat provided with an embodiment of the side airbag apparatus according to the present invention, and Fig. 1 (a) illustrates the side airbag apparatus in an ordinary time and Fig. 1 (b) illustrates the side airbag apparatus in an inflated time.

In Fig. 1, an occupant 12 is seated on a seat 10. The seat 10 (motor vehicle seat) includes a seating portion 10A, and a seat back portion 10B protrude upward from the seating portion 10A. A head rest 10C is attached to a top portion of the seat back portion 10B.

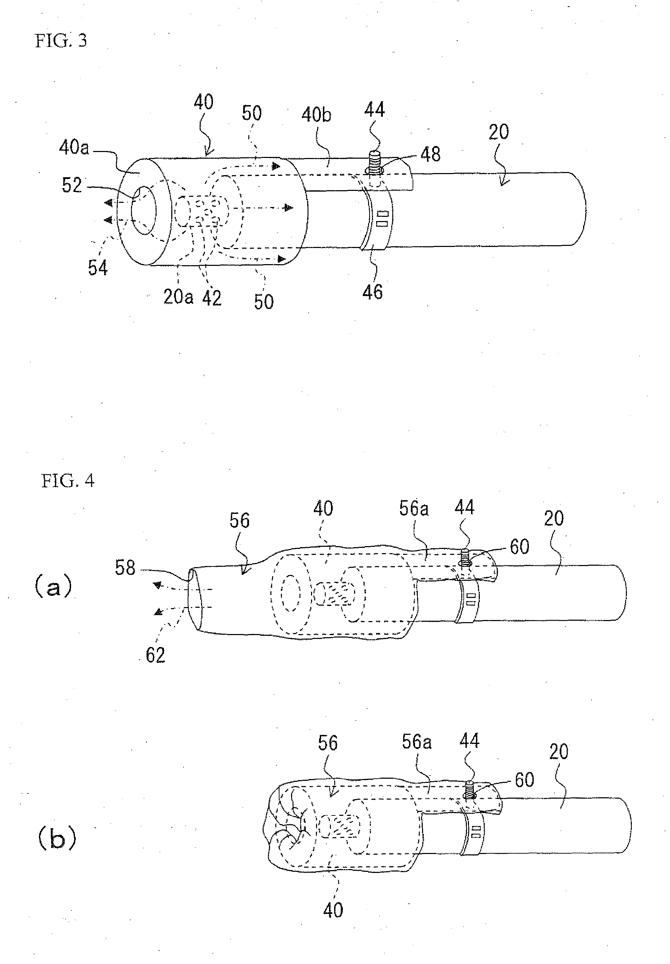

The seat 10 is provided with a side airbag apparatus 14 in the seat back portion 10B for limiting a movement of an upper body of the occupant 12 when in the side collision, the rollover, or the like due to an accident. The side airbag apparatus 14 is provided with a side airbag 16 inflating and deploying into a space between a side wall portion of the automobile body (not shown, and is positioned at a front side of the paper surface in Fig. 1) and the occupant 12 seated on the seat 10. The side airbag apparatus 14 is also provided with, for example, a resin-made casing 18 in which the side airbag 16 is housed in a folded back condition. The side airbag apparatus 14 is further provided with an inflator 20 (refer to Fig. 3 or the like described later) for supplying the gas (pressurized fluid) for inflating and deploying the side air bag 16. The inflator 20 is ignited by means of an inflator control circuit (not shown).

As shown in Fig. 1(a), in an ordinary time, the side airbag 16 is housed in a seat back portion 10B of the seat 10 in a condition of being folded back into the casing 18. On the other hand, for example, when in a side collision or the like of the automobile, the inflator 20 of the side airbag apparatus 14 is ignited by means of the inflator control circuit (not shown). As shown in Fig. 1 (b), the side airbag 16 is inflated and protrudes from the seat 10 (in the present embodiment, while splitting off a stitch line, not shown, in fabrics on a front surface of the seat back portion 10B and on a side surface of the seat back portion 10B facing a vehicle body side wall portion) and is deployed into a space between the vehicle body side wall portion of the automobile and the occupant 12. The side airbag 16 includes a first bag portion 16A positioned upside, and a second bag portion 16B positioned downside. The first bag portion 16A receives a chest portion of the occupant 12 and absorbs a shock, and the second bag portion 16B limits a movement of a waist portion of the occupant 12 in a lateral direction of a vehicle.

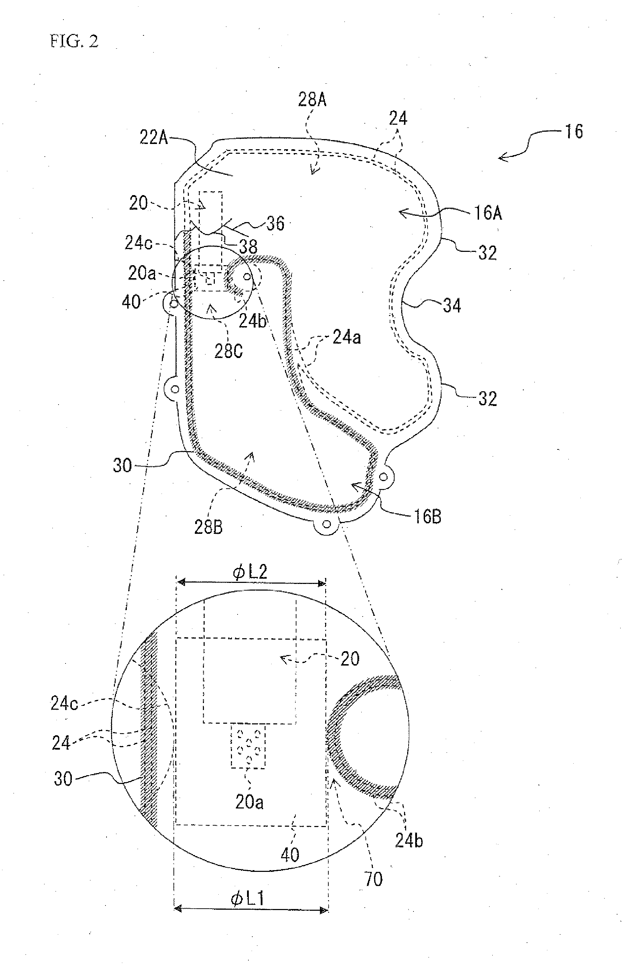

Fig. 2 is side view illustrating an entire structure of the side airbag 16 in an inflated and deployed condition, and showing a partially enlarged view in the vicinity of a chamber connecting portion as well.

In Fig. 2, the side airbag 16 is formed to be a bag-shaped body in which a first panel 22A and a second panel 22B (not shown in Fig. 2) formed into approximately the same shape are stitched and thereby joined along an entire periphery of an outer edge portion. A numeral 24 in Fig. 2 denotes the stitching-and-joining portion. The stitching-and-joining portions are stitched in an entirely reduplicated manner at a portion along the outer edge portion of the bag-shaped body (incidentally, not always necessary to be duplicated but also a single stitch may be applicable). The first panel 22A is disposed at one side (for example, the occupant side) in a vehicle width direction, and the second panel 22B is disposed at the other side (for example, a side wall side of the automobile body) in the vehicle width direction. Incidentally, Fig. 2 is a side view looking from one side in the vehicle width direction, and only the first panel 22A is illustrated.

An inside of the side airbag 16 is partitioned into two chambers including a first chamber 28A formed from an upside to a tip end side in an inflating direction (right side in Fig. 2), and a second chamber 28B formed from a base end side of the inflating direction (left side in Fig. 2) to a downside. The first chamber 28A and the second chamber 28B are partitioned by means of a stitching-and joining portion 24a provided toward inner periphery side. However, the first chamber 28A and the second chamber 28B are connected at a chamber connecting portion 28C provided at the base end side of the inflating direction (left side in Fig. 2). The first chamber 28A and the second chamber 28B having been constructed as mentioned above is provided in the aforementioned first bag portion 16A and a second bag portion 16B, respectively.

The chamber connecting portion 28C is formed between a circular stitching portion 24b having approximately a circular shape, provided at a tip end portion of the stitching-and-joining portion 24a, and a circular stitching portion 24c having approximately a circular shape, provided at the base end side of the side airbag 16 (left side in Fig. 2). A sleeve 40 is fitted into a fitting portion 70, which is a portion where top portions of the respective circular stitching portions 24b and 24c are opposed (refer to a partially enlarged view in Fig. 2). The top portion of the circular stitching portion 24c at the fitting portion 70 side is provided to position inside (right side, and fitting portion 70 side in Fig. 2) of a sealing member portion 30 described later. Thereby, it is set so that an inner diameter L1 of the fitting portion 70 is approximately equal to an outer diameter L2 of the sleeve 40 (refer to the partially enlarged view in Fig. 2). Consequently, the sleeve 40 can be firmly attached to the fitting portion 70 by interference fit, and a good airtightness of a clearance between an outer peripheral surface of the sleeve 40 and an inner peripheral surface of the fitting portion 70 can be kept. (In detailed terms, although a heat cloth 56, described later, intervenes between the outer peripheral surface of the sleeve 40 and the inner peripheral surface of the fitting portion 70, a thickness of the heat cloth 56 made of a base cloth is small, and therefore the description is omitted here.) Further, by providing a circular stitching portion at both sides (or one side may be applicable) of the fitting portion 70 as in the present embodiment, the construction can be formed to have an inner diameter of the circular stitching portion at the top portion to be approximately identical of the outer diameter of the sleeve 40. Thereby, the friction when inserted can be reduced and an attaching property of the sleeve 40 to the fitting portion can be improved in comparison to a case where a fitting portion is formed such that both sides thereof are stitched into a straight line shape, the inner diameter thereof is approximately identical of the outer diameter of the sleeve 40, and the sleeve 40 is inserted into the fitting portion.

The sleeve 40 inserted into the fitting portion 70 is provided on the side of a convex portion 20a that discharges the gas of the inflator 20. The sleeve 40 is provided with a flowing amount distributing function for distributing the gas blown out from the convex portion 20a into the first and second chambers 28A and 28B at a predetermined flowing amount ratio (described later in detail).

In the stitching-and-joining portion 24, at a portion constituting an outer edge of the second chamber 28B (namely, a portion starting from a base end side of the chamber connecting portion 28C of the inflating direction to a tip end of the stitching-and-joining portion 24a which is provided toward an inner periphery side, while running the downside of the side airbag 16), a sealing member portion 30 formed from an appropriate sealing material such as silicone rubber or the like is provided along the stitching-and-joining portion 24 so as to seal the stitching-and-joining portion 24. The sealing member portion 30 is provided to have a wider width than the reduplicated stitching-and-joining portions 24 so that both the stitching-and-joining portions 24 provided in the reduplicated manner can be sealed (refer to the partially enlarged view in Fig. 2). Thereby, the airtightness of the second bag portion 16B having the second chamber 28B can be improved, and the pressure in the second bag portion 16B for limiting the movement of the waist portion of the occupant 12 can be kept at relatively high pressure for relatively long time.

The side airbag 16 (in detailed terms, the first bag 16A) is provided with a concave portion 34 having approximately arc shape at a position in a bag outer edge portion 32 at a tip end side of the inflating direction thereof (right side in Fig. 2), corresponding to an elbow portion 12a of the occupant 12 (refer to Fig. 1). The concave potion 34 is formed so as to reduce an interference of the side airbag 16 with the elbow portion 12a of the occupant (or, so as for the interference of the side airbag 16 with the elbow portion 12a not to occur at all). Incidentally, the concave portion 34 is provided by forming a bag shape while stitching and joining the first and second panels 22A and 22B previously cut out so that a concave portion is formed at a corresponding position in the outer edge portion.

Incidentally, a slit (not shown) is provided in the first panel 22A for inserting the inflator 20 and the sleeve 40 into the side airbag 16. In addition, a cover portion 36 for covering the slit from one side (downside in Fig. 2), and a cover portion 38 for covering the slit from the other side (upside in Fig. 2) are respectively provided. These cover portions 36 and 38 are constructed with part of appropriate filler cloth that is integrally provided by stitching work at a front face of the first panel 22A. The airtightness of the side airbag 16 can be improved by covering the slit with folding back the covering members 36 and 38, after inserting the inflator 20 and the sleeve 40 through the slit.

Fig. 3 is a perspective view illustrating an entire structure of the sleeve 40 that is provided in the inflator 20.

In Fig. 3, the sleeve 40 is a cylinder member having a squeezing portion 40a at one side (left side in Fig. 3, i.e., the second chamber 28B side), and a tongue piece portion 40b for hooking the sleeve 40 on the inflator 20, at the other side (right side in Fig. 3, i.e., first chamber 28A side). On the other hand, the inflator 20 has the convex portion 20a at one side thereof (left side in Fig. 3, i.e., the second chamber 28B side). A plurality of blowing-out holes 42 for blowing out the gas are provided in the convex portion 20a. The inflator 20 is supported by a clip 46 having a bolt 44, and the inflator 20 is fixed to the casing 18 by fastening the bolt 44 on the casing 18.

A hole 48 for the bolt 44 of the clip 46 to be inserted is provided in the tongue piece portion 40b of the sleeve 40. By that the bolt 44 is inserted into the hole 48, the sleeve 40 is hooked in a condition of covering one side (left side in Fig. 3, i.e., the second chamber 28B side) of the inflator 20. Incidentally, an inner diameter of the sleeve 40 is formed to be greater than an outer diameter of the inflator 20, and a clearance of a flow path (indicated by an arrow 50 in Fig. 3) where the blown out gas flows toward a first chamber 28A side is secured between an inner peripheral surface of the sleeve 40 and an outer peripheral surface of the inflator 20.

Further, an opening 52 is provided in the squeezing portion 40a of the sleeve 40. A bore diameter of the opening 52 is set to a previously calculated appropriate value so as for the blown out gas of the inflator 20 to be distributed to the first chamber 28A of the first bag portion 16A and the second chamber 28B of the second bag 16B at an appropriate flowing amount ratio. This is for the first bag portion 16A and the second bag portion 16B constituting the side airbag 16 to perform a desired deploying behavior, or for the pressures in the first bag portion 16A and the second bag portion 16B to become desired values, respectively. Thereby, the gas blown out from the inflator 20 is controlled to a predetermined flowing amount that is previously set, and supplied to the second chamber 28B side. (The flow path is indicated by an arrow 54 in Fig. 3.)

The sleeve 40 having the aforementioned construction is attached to the chamber connecting portion 28C in a condition of being covered with the heat cloth 56. Fig. 4 is a perspective view illustrating an entire structure of the heat cloth 56, in which Fig. 4(a) illustrates a condition in a halfway of inflation and deployment of the side airbag 16, and which Fig. 4(b) illustrates a condition after completion of the inflation and deployment.

In Fig. 4, the heat cloth 56 is a cylindrical base cloth having an opening 58 at one side (left side in Fig. 4, i.e., the second chamber 28B side), and a tongue piece portion 56a for hooking the heat cloth 56 on the inflator 20 at the other side (right side in Fig. 4, i.e., the first chamber 28A side). A length of the heat cloth 56 in a cylinder axis direction is configured to be longer than that of the sleeve 40. A hole 60 for the bolt 44 of the clip 46 to be passed through is provided in the tongue piece portion 56a. By that the bolt 44 is passed through the hole 60, the heat cloth 56 is hooked on one side of the inflator 20 (left side in Fig. 4, i.e., the second chamber 28B side) in a condition of covering the sleeve 40.

As shown in Fig. 4(a), in a halfway of inflation and deployment of the side airbag 16, the heat cloth 56 is brought to a fully stretched condition by the gas blown out from the inflator 20 via the opening 52 of the sleeve 40. The gas is supplied into the second chamber 28B from the opening 58 at a tip end of one side of the heat cloth 56 as indicated by an arrow 62 in Fig. 4(a). Thereby, the high temperature gas blown out from the inflator 20 toward the chamber 28B side is suppressed to blow out from the opening 52 of the squeezing portion 40a of the sleeve 40 to a surrounding area and directly collides with the first and second panels 22A and 22B. This reduces a deterioration of the base cloth and stitches due to the high temperature gas.

Fig. 4(b) illustrates a condition after the inflation and deployment of the side airbag 16 is complete. The pressure of a portion for limiting the waist portion is set to be greater than that of a portion of the chest portion in general in a side airbag having a plurality of portions for respectively restraining a chest portion and the waist portion of the occupant as in the present embodiment, in the light of improvement of safety. Accordingly, it is preferable to prevent the gas from blowing back to the chest portion side from the waist portion side after completing the inflation and deployment of the airbag. In the present embodiment, the opening 52 of the sleeve 40 is obstructed by that the heat cloth 56 is folded back when the gas is trying to blow back from the second chamber 28B side to the first chamber 28A side via the chamber connecting portion 28C after the inflation and deployment of the side airbag 16 is completed, as shown in Fig. 4(b). Thereby, the gas is suppressed to blow back from the second chamber 28B to the first chamber 28A and the pressure in the second bag portion 16B can be kept at relatively high pressure for relatively long time.

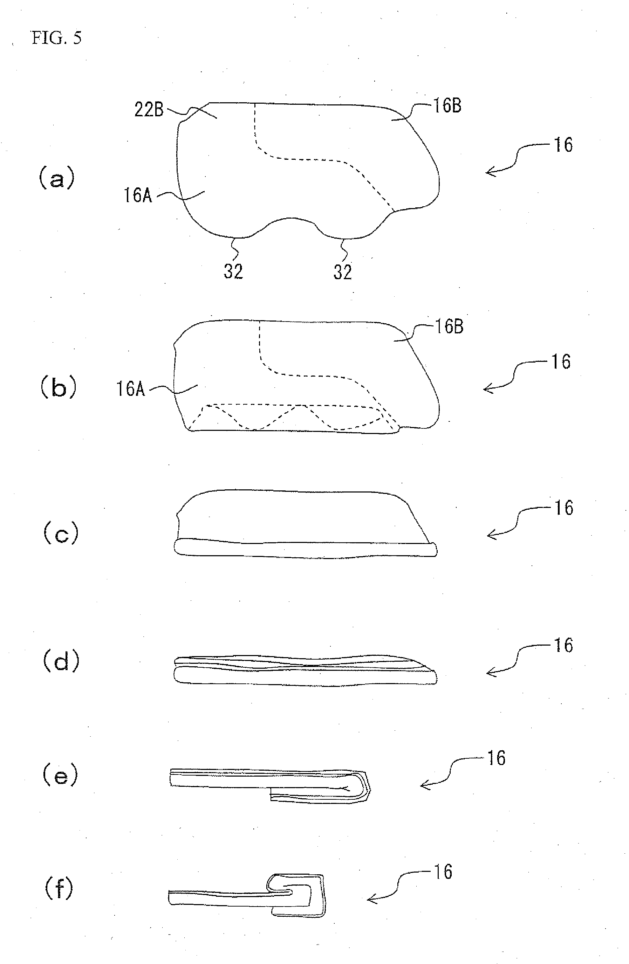

Fig. 5 is a view explaining the way how to fold back the side airbag 16 when being housed in the casing 18, described earlier. Incidentally, a condition of the side airbag 16 looking from the second panel 22B side is shown here.

Firstly, a so-called "inward folding" is performed in which the above-described bag outer edge portion 32 at a tip end side of the inflating direction (downside in Fig. 5) is tucked into an inside in a manner so as to tuck into a space between the first panel 22A and the second panel 22B, from a condition that the side bag 16 is flatly spread (a condition shown in Fig. 5(a)). In the present embodiment, the inward folding is performed only for the first bag portion 16A. Thereby, the tip end side of the inflating direction (downside in Fig. 5) of the side airbag 16 is formed to be approximately flat shape (a condition shown in Fig. 5(b)). Then, a so-called "roll-folding" is performed in which the side airbag 16 is tucked down while rolling up into a roll-shape from the tip end side (downside in Fig. 5) toward a base end side (upside in Fig. 5) of the inflating direction of the approximately flatly shaped side airbag 16 (a condition shown in Fig. 5(c)). A diameter of the roll and a number of times of performing the roll-folding at this moment is approximately set corresponding to a size of the airbag, a size of the casing where the airbag is housed, or the like. However, in the present embodiment, for example, a first roll width is set to be 23 mm, and a number of folding times is set to be 3 times.

Next, as for the rest part of the base end side of the side airbag 16 in the inflating direction (upside in Fig. 5), a so-called "accordion-fold" is performed in which the rest part of the base end side of the side airbag 16 is tucked down in an accordion-like manner by alternatively performing a mountain-fold and a valley-fold. Thereby, the side airbag 16 is folded back into a rod-shape (a condition shown in Fig. 5(d)). Thereafter, the rod-shaped side airbag 16 is folded back toward one side (downside in the drawing here) so as to reduce a size in a length direction (a condition shown in Fig. 5(e)), and further, the folded-back portion is entirely folded back toward the other side (upside in the drawing here) (a condition shown in Fig. 5(f)). In this condition, the side airbag 16 is housed in the casing 18.

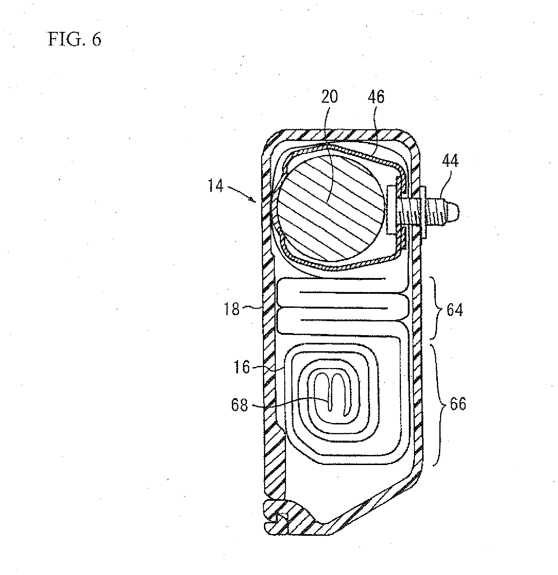

Fig. 6 is a cross-sectional view showing a case 18 in a condition where the side airbag 16 being folded back in a manner as described above is housed in the casing 18.

As shown in Fig. 6, by that the bolt 44 provided in the above-described clip 46 is fastened to the casing 18, the inflator 20 is fixed to the casing 18. Further, an end portion of the base end side of the inflating direction of the side airbag 16 (upside in Fig. 6) is fixed by being sandwiched between the clip 46 and the casing 18. Furthermore, as described above, the side airbag 16 is folded back into the accordion-like folding (the part denoted by a numeral 64 in the drawing) at the base end side in the inflating direction, folded back into the roll-folding (the part denoted by a numeral 66 in the drawing) at the tip end side in the inflating direction (downside in Fig. 6), and folded back into the inward-folding (the part denoted by a numeral 68 in the drawing) at the tip end in the inflating direction. The side airbag 16 is housed in the casing 18 in the thus described condition.

In the automobile where the side airbag apparatus 14 having the construction described above is mounted, various types of sensors are provided for detecting the occurrence (or prediction for the occurrence) of the collision (including the side collision or the like) of the automobile or the rollover thereof when the same occurs. Moreover, when in an emergency of the side collision or the like, these sensors detect the emergency, and an inflator control circuit starts up an initiator of an inflator 12 on the basis of a detecting signal from these sensors. Thereby, the inflator 20 is started up and the gas for inflating the airbag is blown out. The side airbag 16 is inflated and deployed in a space between the side wall portion of the automobile body and the occupant 12.

According to the side airbag apparatus 14 of the present embodiment having a construction and performing an operation explained above, a below mentioned advantage is obtained.

That is, in the present embodiment, the side airbag 16 is configured to have a shape such as that the interference of the side airbag 16 with the elbow portion 12a of the occupant 12 is reduced in occurrence during inflation and deployment of the side airbag 16 by providing the concave potion 34 at the position of the bag outer edge portion 32 at a tip end side in the inflating direction of the side airbag 16, corresponding to the elbow portion 12a of the occupant 12. Thereby, when the side airbag 16 is inflated and deployed in a space between the side wall portion of the vehicle body and the occupant 12, the tip end portion in the inflating direction of the side airbag 16 can be suppressed to get caught by the elbow portion 12a of the occupant 12. As a result, the deployment of the side airbag 16 is suppressed to be blocked, and the deploying property can be improved.

Further, since the present embodiment is constructed to form the concave portion 34 at the bag outer edge portion 32, as described earlier, the base cloth (the first panel 22A and the second panel 22B) for forming the side airbag 16 is cut out into a shape corresponding thereto. Thereby, the side airbag 16 can be manufactured without increasing a particular process such as a stitching work or the like performed thereafter. Accordingly, an extra stitching process is not required in comparison to a construction in which, for example, a concave portion or a non-inflating portion having a smaller thickness than other portion formed by stitching a periphery of the portion on an inner periphery side relative to the bag outer edge portion prevents the interference of the airbag with the elbow portion. This results in improvement of the productivity of the airbag.

Furthermore, in the present embodiment, specifically, the side airbag 16 is housed in the casing 18 in a condition that the base end side in the inflating direction of the side airbag 16 is folded back into the accordion-like shape, and the tip end side in the inflating direction thereof is folded back into the roll-shape.

In general, there are tendencies that a deploying speed is relatively fast when an airbag is housed while being folded back into an accordion-like shape, and that the airbag hardly receives an influence of the obstacle when an airbag is housed while being folded back into a roll-shape.

Accordingly, in the present embodiment, the deploying speed of the side airbag 16 can be caused to be fast, because the same is folded back into the according-like shape at the base end side of the inflating direction where the possibility of being in contact with the obstacle such as an arm of the occupant 12 or the like is low. Further, the influence of the obstacle can hardly be received, because the side airbag 16 is folded back into the roll-shape at the tip end side of the inflating direction where there is a possibility that the obstacle such as the arm of the occupant 12 or the like exists. As a result, since both the improvement of the deploying speed and the suppression for the influence of the obstacle can be satisfied, the deploying property of the side airbag 16 can further be improved.

Moreover, the present invention is specifically constructed such that an inside of the side airbag 16 is partitioned into the first chamber 28A and the second chamber 28B, and thereby the side airbag 16 is constructed with two of the first bag portion 16A for limiting a movement of the chest portion of the occupant 12, and the second bag portion 16B for limiting a movement of the waist portion of the occupant 12. Thereby, a body of the occupant 12 can be restrained respectively in the chest portion and the waist portion in occurrence of the side collision of the automobile or in occurrence of the rollover of the vehicle body, or the like, and the safety can be improved.

Incidentally, in the above-described, although the shape of the concave portion 34 provided at the bag outer edge portion 32 of the side airbag 16 is configured to be the approximately arc shape, the present invention is not limited thereto and may be configured to be a concave portion having a polygonal shape, such as, for example, a triangular shape, a rectangular shape, or the like. Further, the side airbag 16 may not have the concave portion but may be formed to have a simple notched portion. That is, it is sufficient that the bag outer edge portion 32 at the tip end side in the inflating direction of the side airbag 16 is formed not to interfere with the elbow portion 12a of the occupant 12 when in inflation and deployment.

Further, although the side airbag in which the inside of the airbag is constructed with two bag portions by being partitioned into two chambers is explained above as an example, the present invention is not limited to the above-described. For example, the present invention may be applied to a side airbag constructed as a single bag in which an inside of the bag is not partitioned, or a side airbag constructed with three or more bag portions in which an inside of the airbag is partitioned into three or more chambers.

Furthermore, as mentioned above, although the side airbag 16 is constructed by stitching and joining the first panel 22A and the second panel 22B, the present invention is not limited to the above described. For example, the side airbag 16 may be constructed while joining the first panel 22A and the second panel 22B by other joining devices such as, hollow weave or the like.

Moreover, in the above-described, although a case in which the present invention is applied to a so-called seat-mount type side airbag apparatus that is mounted in the seat back 10B of the seat 10 is explained as an example, the present invention is not limited to the above-described. The present invention may be applied to, for example, a so-called door-mount type side airbag apparatus that is mounted on an automobile door.

## Claims

1. A side airbag inflated and deployed in a space between a side wall portion of a vehicle body and an occupant seated on a seat disposed inside the vehicle body, wherein
a bag outer edge portion at a tip end side of an inflating direction is formed into a shape such that an interference of the bag outer edge portion with an elbow portion of the occupant when in inflation and deployment is reduced.

2. The side airbag according to Claim 1, wherein a shape of the bag outer edge portion is a shape including a concave portion at a position corresponding to the elbow portion of the occupant in a condition of being inflated and deployed.

3. The side airbag according to Claim 2, being housed in a condition wherein the base end side in the inflating direction thereof is folded back into an accordion-like shape and the tip end side in the inflating direction thereof is folded back into a roll-shape.

4. The side airbag according to Claim 2 or 3, wherein an inside thereof is partitioned into at least two chambers.

5. A side airbag apparatus comprising:
the side airbag according to any one of Claims 1 through 4; and
an inflator for supplying a pressurized fluid for inflating and deploying the side airbag.

6. A motor vehicle seat comprising:
the side airbag according to any one of Claims 1 through 4; and
an inflator for supplying gas for inflating and deploying the side airbag.
